# EUROPEAN PATENT APPLICATION

(11) **EP 3 183 973 A1**
(43) Date of publication of application: **28.06.2017**
(21) Application number: 15202203.4
(22) Date of filing: 22.12.2015
(51) Int. Cl.: A23C 9/142

(54) **A DAIRY PRODUCT**

(71) Applicant: Agriculture and Food Development Authority (TEAGASC), Co. Carlow (IE); University College Cork, Cork City (IE)
(72) Inventor: MIHATSCH, Walter, 81545 Munchen (DE); KELLY, Phil, Co. Cork (IE); PROOS, Sinead, Co. Cork (IE)
(74) Representative: Carmody, Mark

(57) **Abstract**

A dairy product produced by a method comprising steps of: a) passing skim milk through an ultrafiltration membrane to produce an ultrafiltration permeate; and b) combining one part of the ultrafiltration permeate with whole milk; wherein the dairy product is low in protein and retains total solids content similar to a cow's milk.

## Description

### Field of the Invention

The invention relates to a dairy product. Specifically, the invention relates to a dairy product that is suitable as a substitute milk for a toddler.

### Background to the Invention

The ideal nutrition for toddlers is an optimised mixed diet and there is no doubt that having an optimised mixed diet leads to a healthy diet and healthy lifestyle. It is well accepted that dairy products play an important role in contributing to this optimised mixed diet. A least cost analysis shows that dairy products are by far the lowest cost source of dietary Calcium (Ca) and Riboflavin (Vitamin B2). Dairy products are in fact the most important sources of Ca and Vitamin B2 in our Western diet. Based on Ca and Vitamin B2 intake, toddlers should consume about 300mls (2 servings) of dairy products / day. The nutritional guidelines for dairy consumption are based on Ca and Vitamin B2 and not protein, which is important to note.

The recommended protein intake for infants and toddlers is about 1 - 1.5g / Kg of body weight / day. But studies show that boys and girls get far more protein in their early years than they need. The average protein intake is about 2.5g / Kg of body weight / day, which is simply an amount of protein infants and toddlers don't need. Therefore currently in our Western World, infants and toddlers get for more protein than they need. Although growing-up milk has significantly lower protein levels compared to cow's milk and is fortified with nutrients that may not be consumed in sufficient quantities to meet toddlers' daily requirements, it has several disadvantages. The taste profile of growing-up milk better resembles a sweet milkshake rather than a natural milk drink. There is a concern among health care professionals that weaning onto such products at a critical time in an infants development, could lead to the desire of more sweet and unhealthy products rather than fresh dairy produce. In addition, commercially available toddler milks are priced at a premium vs. regular cow's milk, making them affordable only to families with higher socio-economic means. Finally, they are highly fortified with nutrients that you would not expect a milk to provide within the diet of a toddler, leading organisations such as WHO and EFSA to debate the "unique role" they serve within the toddler diet.

Previous attempts have also been made to produce a milk product that is low in fat and low in calories. For example, the low-calorie milk product described in WO 2008/136671 (Friesland Brands BV) is characterized by a fat content lower than 1.5 wt.%, a lactose content lower than 4 wt.%, a protein content between about 1 and 5 wt.%, and a casein to whey protein ratio higher than that in raw milk. WO 2006/087409 (Valio Ltd.) describes a low-energy, non-fat milk beverage with a high calcium content, a whey protein solution (120 to 240mg/100g of milk solution) or a combination thereof, and from which carbohydrates have been removed either entirely or partly. The final carbohydrate concentration in the product being 1.7g/100g of milk solution at the most.

However, the problem associated with previous attempts at formulating a milk product that is low in fat and low in calories is that nutritional contents of the products fall well short of the dietary requirements of toddlers and adults alike. The products also do not match or come close to the appearance or taste of natural cow's milk, and the cost associated with these type of products are often limiting.

It is the objective of the invention described herein to overcome at least one of the above-referenced problems.

### Summary of the Invention

The invention relates to a reduced-fat or full-fat and low-protein dairy (milk) product, tailored to meet a toddler's nutritional needs. It has a comparable taste to regular bovine milk and is produced in fresh, Ultra-High Temperature (UHT) and powder formats. The toddler milk is nutritionally tailored for toddlers in that it is low in protein. The products can be produced so that they are affordable to a wider range of consumers.

There is provided, according to the appended claims, a dairy product having a nutritional profile as follows:

| **Nutrient** | **Range (w/v)** |
|---|---|
| Energy | 33-55 kCals |
| Protein | 0.9 to 2.5 g/100ml |
| Lipids | 1.5 to 2.5g/100ml |
| Carbohydrate (CHO) | 4 to 6 g/100ml |
| Vitamin B2 | 180µg/100ml |
| Vitamin A | 31 to 100 µg/100ml |
| Vitamin D | 0.17 µg/100ml |
| Iodine | 80-90 µg/100ml |
| Calcium | 70 to 120mg/100ml |

There is also provided, according to the appended claims, a dairy product having a nutritional profile as follows:

| **Nutrient** | **Range (w/v)** |
|---|---|
| Energy | 45-80 kcal/100ml |
| Protein | 0.9 to 2.5 g/100ml |
| Lipids | 3.0 to 4.5 g/100ml |
| Carbohydrate (CHO) | 4 to 6 g/100ml |
| Vitamin B2 | 180µg/100ml |
| Vitamin A | 31 to 100 µg/100ml |
| Vitamin D | 0.17 - 0.9 µg/100ml |
| Iodine | 80-90 µg/100ml |
| Calcium | 70 to 120mg/100ml |

In one aspect, the product comes in the form of a liquid, a powder or UHT-treated.

In one aspect, the product is nutritionally tailored for a toddler.

In one aspect, the product originates from the milk of mammal such as a cow, a water buffalo, a goat, a sheep, a yak, a horse, a camel, a domestic buffalo, and a donkey. Preferably, the product originates from cow's milk.

In one aspect, the dairy product is milk, yoghurt, a yoghurt drink, a probiotic, chocolate milk, shake or mousse.

In one aspect, there is provided a method for manufacturing a reduced-fat, reduced-protein, dairy product, the method comprising steps of:
passing skim milk through an ultrafiltration membrane to produce an ultrafiltration permeate; and
combining one part of the ultrafiltration permeate with whole milk;
wherein the dairy product is low in fat, low in protein and retains a taste profile similar to a reduced-fat milk.

In one aspect, the method further comprises the steps of:
(c) passing a second part of the ultrafiltration permeate through a nanofiltration membrane or a 1 kDa ultrafiltration membrane to produce a permeate; and
(d) combining the permeate with the combination of one part of the ultrafiltration permeate and whole milk in (b) to produce the dairy product which is low in fat, low in protein and retains a taste profile similar to a reduced-fat milk.

According to the invention described herein, there is provided a method for producing a full-fat, reduced-protein, dairy product, the method comprising the step of:
passing skim milk through an ultrafiltration membrane to produce an ultrafiltration permeate;
combining one part of the ultrafiltration permeate with whole milk; and blending cream with the combination of the one part of the ultrafiltration permeate combined with whole milk in (b) to produce the dairy product which is low in protein, has normal levels of fat when compared to whole milk and retains a taste profile similar to whole milk.

In one aspect, the method further comprises the steps of:
(d) passing a second part of the ultrafiltration permeate through a nanofiltration membrane or a 1 kDa ultrafiltration membrane to produce a permeate; and
(e) combining the permeate with the combination of the first part of the ultrafiltration permeate and whole milk produced in (b) prior to or following the step (c) of blending the cream.

In one aspect, the method further comprises the step of adding one or more supplements to the product.

In one aspect, the supplements are selected from vitamin B1, vitamin B2, vitamin B3, vitamin A, vitamin D, Iodine, calcium, docosahexaenoic acid (DHA) and iron. Preferably, the supplements are vitamin B2, vitamin A, vitamin D, Iodine and Calcium.

In one aspect, the supplements are added to in the following concentrations: 180µg/100ml (w/v) vitamin B2, 31 to 100 µg/100ml (w/v) vitamin A, 0.17 µg/100ml vitamin D, 80-90 µg/100ml (w/v) Iodine and 70 to 120 µg/100ml (w/v) Calcium.

In one aspect, the ultrafiltration step utilises membranes having a molecular weight cut off of between 5 kDa and 50 kDa.

In one aspect, the nanofiltration step utilises membranes having a molecular weight cut-off of between 100 and 1000 Da.

In one aspect, the milk used in the method steps originates from a mammal such as a cow, a water buffalo, a goat, a sheep, a yak, a horse, a camel, a domestic buffalo and a donkey. Preferably, the milk is cow's milk.

According to the invention, there is provided a dairy product produced by the method described above.

In the specification, the term "infant" should be understood to mean a child between the ages of 0 to 12 months.

In the specification, the term "toddler" should be understood to mean a child between the ages of one year and three years.

In the specification, the term "pre-schooler" should be understood to mean 3 to 6 years.

In the specification, the kcal value of the "energy", when used in determining the nutritional profile of the dairy products described herein, has been calculated using the lowest and highest macronutrient combination. Hence, the lowest energy value is calculated using the lowest quantity of lipid, carbohydrate and protein in the product; while the highest energy value is calculated using the highest quantity of lipid, carbohydrate and protein.

In the specification, the term "dairy product" should be understood to mean a dairy product or milk product produced from the milk of mammal such as a cow, a water buffalo, a goat, a sheep, a yak, a horse, a camel, a domestic buffalo, and donkey.

In the specification, the term "fresh", in relation to a dairy product or a milk product, should be understood to mean the dairy product or the milk product having a sufficient shelf life of between 1 and 10 days such that it remains suitable for human consumption. This definition also includes extended shelf life (ESL) products which typically have a shelf life of between 30 days and 40 days, and Ultra-High Temperature (UHT) products, which typically have a shelf life of up to 12 months.

In the specification, the term "ultrafiltration (UF) membrane" should be understood to mean a filtering process which separates components on the basis of molecular size. Typically, UF membranes with a molecular weight cut-off (MWCO) of between 5 kDa and 50 kDa is sufficient to selectively retain milk proteins in this first filtration step - this retained stream is commonly referred to as retentate. Ideally, the UF membrane with a MWCO of 10 kDa is used.

In the specification, the term "ultrafiltration permeate" should be understood to mean milk components that are transmitted through the UF membrane during the first filtration step are referred to as UF permeate. Typically, these include water, lactose, and soluble salts.

In the specification, the term "nanofiltration (NF) membrane" should be understood to mean filtering and concentration of solutions in the 'nano' size range using membranes with typical NF MWCO of 100-1000 Dalton. Ideally, a NF membrane with a MWCO of between 300 to 500 Da is used. Alternatively, a UF membrane with a MWCO of 1 kDa may also be used to produce a "nanofiltration" permeate. This 1 kDa MWCO UF membrane is very effective at retaining minerals, including calcium, in milk permeate while allowing the lactose to go through.

In the specification, the term "nanofiltration permeate" or "permeate" insofar as it relates to the second, option filtration step, should be understood to mean milk or whey components that are transmitted through the NF membrane or the 1 kDa MWCO UF membrane during filtration are referred to as NF permeate or permeate. Typically, these include water, monovalent ions and small amounts of lactose.

In the specification, the term "skim milk" should be understood to mean milk resulting from the defatting of milk. The defatting process is usually by means of cream separation by centrifugal means. The residual fat content of skim milk is < 0.1%.

In the specification, the term "reduced-fat milk" should be understood to mean milk with a fat content typically < 1.0%. 'Reduced fat milk' is a further variation where the fat content falls within 1-2%.

In the specification, the term "whole milk" or "full fat milk" should be understood to mean milk of unaltered composition as produced by the lactating animal.

In the specification, the term "yoghurt drink" should be understood to mean a probiotic drink (which rely on specific probiotic culture strains which are occasionally combined with yoghurt strains in order to enhance fermentation and improve sensory characteristics), a yoghurt drink (which are made with the typical fermentation cultures of *Streptococcus thermophilus* and *Lactobacillus bulgaricus*), and a buttermilk drink (which may be produced with/without fermentation), or a mixture thereof. Any of the above-mentioned yoghurt drinks may be flavoured or natural. The flavouring may be chocolate, strawberry, banana, mint, chocolate-mint, or any flavouring known to those skilled in the art and used in such drinks.

### Brief Description of the Drawings

The invention will be more clearly understood from the following description of an embodiment thereof, given by way of example only, with reference to the accompanying drawings, in which:-
**Figure 1** illustrates a flow chart of the process for producing one of the dairy products described herein;
**Figure 2** illustrates a flow chart of the process for producing another of the dairy products described herein;
**Figure 3** illustrates the appearance of the reduced-fat and reduced-protein dairy product described herein, commercially available reduced-fat milk; and commercially available toddler milk.

### Detailed Description of the Drawings

### Materials and Methods

### Reduced-fat, Reduced-protein Milk Product Process

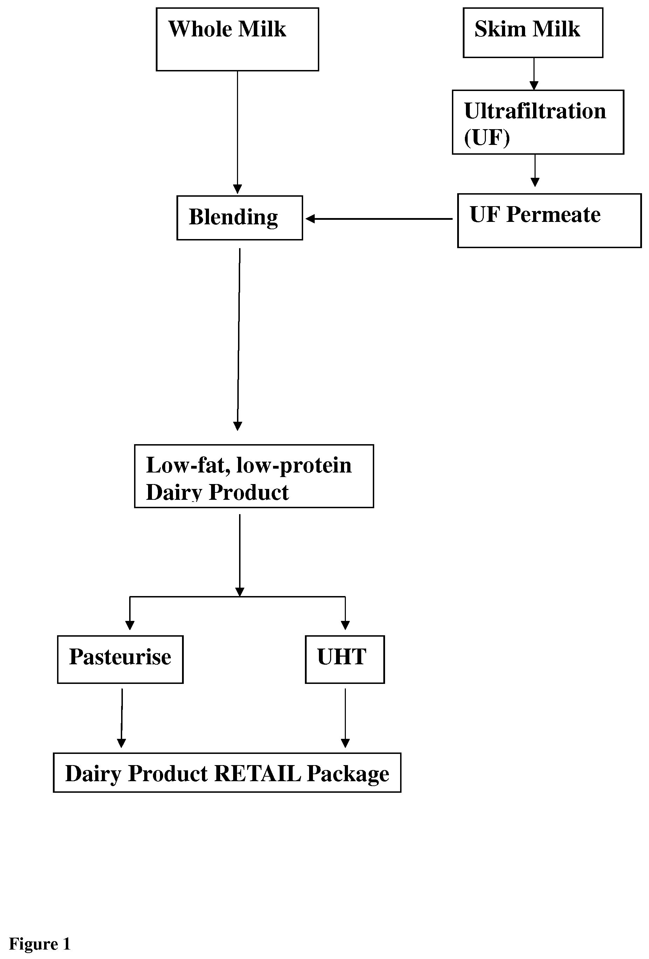

One of the objectives of the invention is to produce a dairy product having a reduced protein and fat content but with a taste similar to reduced-fat milk. The objective was achieved by using either regular skim milk produced during cream (fat) separation or to source skim milk powder (SMP) and reconstitute it in water to similar milk solids levels of fresh skim milk (see Figure 1). The skim milk is passed through an ultrafiltration membrane to produce an ultrafiltration permeate. A first part of the resultant ultrafiltration permeate is combined with whole milk. This results in a daily product that has reduced fat levels, has reduced protein content and a taste profile similar to reduced-fat milk. Optionally, a second part of the ultrafiltration permeate is passed through a nanofiltration membrane or a 1 kDa ultrafiltration membrane and the resultant permeate is combined with the whole milk and the first part of the ultrafiltration permeate. This also results in a dairy product that has reduced fat levels, has reduced protein content and has a taste profile similar to reduced-fat milk. Importantly, the resultant dairy product has a reduced protein content compared to reduced-fat milk while retaining a reduced-fat milk taste.

The method used here provides a significant shift in the dairy product composition with minimal impairment of flavour. In addition, when the fat content of the milk is standardised during the process, it is aligned in percentage terms with that of the percentage of protein, thus, simplifying the subsequent protein standardisation step *i.e.* one addition of milk permeate will bring both fat and protein to the 1.5% target.

### 'Full-fat' or Whole Milk and Reduced Protein Product Process

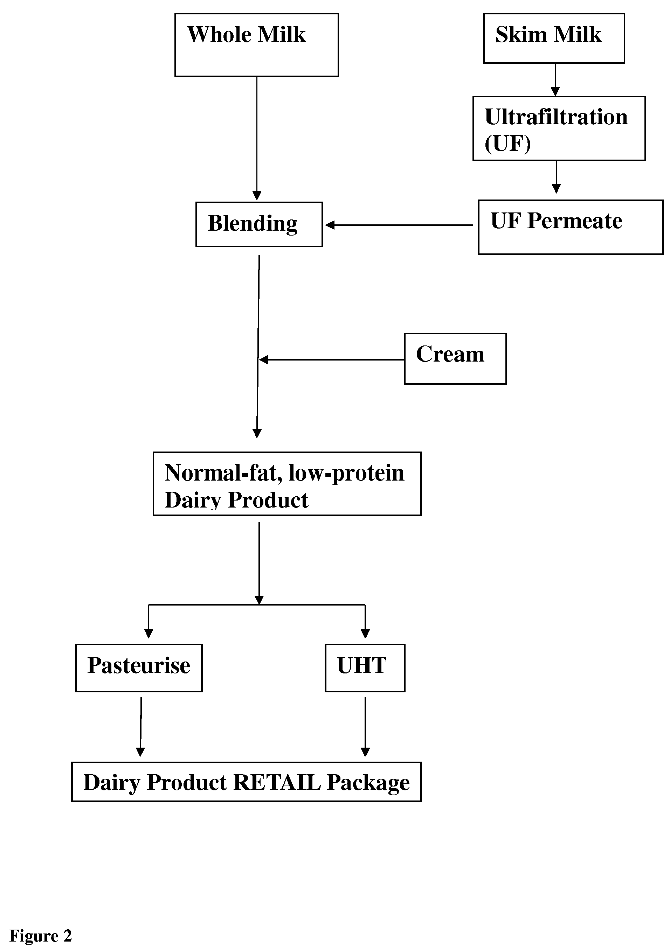

One of the objectives of the invention is to produce a dairy product having a reduced protein and full fat content or a fat content similar to that of whole milk but with a taste similar to whole (full fat) milk. The objective was achieved by using either regular skim milk produced during cream (fat) separation or to source skim milk powder (SMP) and reconstitute it in water to similar milk solids levels of fresh skim milk (see Figure 2). The skim milk is passed through an ultrafiltration membrane to produce an ultrafiltration permeate. A first part of the resultant ultrafiltration permeate is combined with whole milk. This results in a dairy product that has reduced fat levels, has reduced protein content and has a similar taste profile to that of whole milk. Optionally, a second part of the ultrafiltration permeate is passed through a nanofiltration membrane or a 1 kDa ultrafiltration membrane and the resultant permeate is combined with the whole milk and the first part of the ultrafiltration permeate. This also results in a dairy product that has normal, full fat content similar to whole milk, has reduced protein content and has a taste profile similar to whole milk. After the whole milk is combined with the ultrafiltration permeate, cream from the cream (fat) separation stage is blended with the combination to produce a dairy product that has normal fat levels (approximately 3.5% fat), has reduced protein content

Importantly, the resultant dairy product has a full-fat and reduced protein content compared to reduced-fat or whole milk while retaining a whole milk taste.

It is also possible to generate milk permeate by ultrafiltration of whole milk and substitute this for the ultrafiltration permeate sourced from skim milk, as described above.

The method used here provides a significant shift in the dairy product composition with minimal impairment of flavour.

### Powder form

A typical method for making powdered dairy products is used here. For example, following standard concentration by evaporation, the remaining product is spray dried, leaving the powdered form.

### UHT

Standard UHT procedures are used to make a UHT version of the dairy product. In essence, the dairy product is heated to 140°C with a holding time of not less than 4 seconds, followed by either aseptic filling/packaging (long shelf life product (typically 6-12 months) or 'clean-fill' to produce an Extended Shelf Life (ESL) product with a typical shelf life of 30-40 days.

### Nutritional Profile of Dairy Milk Product

The nutritional profile of the dairy milk product of the invention.

**Table 1: Nutritional Profile of reduced-fat and reduced-protein dairy milk product described herein in comparison to other typical types of commercial milk products.**

| **Nutrient** | **Whole Milk** | **Reduced-fat Milk** | ***Toddler Milk** | ****Reduced-fat and Reduced-Protein Dairy Product** |
|---|---|---|---|---|
| Energy (kcal/100ml) | 64 | 46 | 50 - 67 | 38.5 |
| Protein (g/100ml) | 3.3 | 3.3 | 1.3 - 1.8 | 1.5 |
| Lipids (g/100ml) | 3.5 | 1.5 | 1.9 - 3.3 | 1.5 |
| CHO (g/100ml) | 4.8 | 4.9 | 6.3 - 8.5 | 4.6 |

| | | | | |
|---|---|---|---|---|
| *a typical commercially available toddler milk ** the reduced-fat and reduced-protein dairy product described herein; CHO = carbohydrate | | | | |

**Table 2: This is a nutritional profile of the reduced-fat and reduced-protein dairy product described herein.**

| **Nutrient** | **Range (w/v)** |
|---|---|
| Energy | 33-55 kcal/100ml |
| Protein | 0.9 to 2.5 g/100ml |
| Lipids | 1.5 to 2.5g/100ml |
| Carbohydrate (CHO) | 4 to 6 g/100ml |
| Vitamin B2 | 180µg/100ml |
| Vitamin A | 31 to 100 µg/100ml |
| Vitamin D | 0.17 µg/100ml |
| Iodine | 80-90 µg/100ml |
| Calcium | 70 to 120mg/100ml |

**Table 3: This is a nutritional profile of the full-fat and reduced-protein dairy product described herein.**

| **Nutrient** | **Range (w/v)** |
|---|---|
| Energy | 45-80 kcal/100ml |
| Protein | 0.9 to 2.5 g/100ml |
| Lipids | 3.0 to 4.5 g/100ml |
| Carbohydrate (CHO) | 4 to 6 g/100ml |
| Vitamin B2 | 180µg/100ml |
| Vitamin A | 31 to 100 µg/100ml |
| Vitamin D | 0.17 - 0.9 µg/100ml |
| Iodine | 80-90 µg/100ml |
| Calcium | 70 to 120mg/100ml |

### Calcium Adjustment

The incorporation of an optional second stage ultrafiltration step using a membrane of appropriate molecular weight cut-off (MWCO) enables further fractionation of the milk permeate arising from primary ultrafiltration to produce a mineral-rich permeate with a recovery efficiency of pprox.. 70%. This mineral-rich phase may be re-incorporated either in its dilute state into reduced-protein milk or may be further concentrated (using a variety of methods *e.g.* thermal evaporation; reverse osmosis *etc.*) before reincorporation. Thus, the reduced protein milk should contain pprox.. 70% of that of the naturally bioavailable soluble minerals of the original milk used to in the method, such as, calcium.

### Taste

Current commercially available toddler milk is processed using UHT, which gives it a characteristic "burnt" odour and taste. While masking strategies have been successful in improving the taste of these toddler milks, they are still significantly different to the taste of fresh milk, better resembling the taste of a sweet milkshake.

The method of manufacturing the dairy products as described herein, which modifies cow's milk through process refinements such as ultrafiltration and nanofiltration, primarily to reduce the protein content, leads to a dairy product that closely resembles the taste of reduced-fat cow's milk and whole cow's milk, but with a reduced protein and reduced fat content, with respect to the reduced-fat milk, and with a reduced protein but normal fat content, with respect to the whole milk, both of which are nutritionally tailored for toddlers between the ages of 1-3 years.

### Sensory test for reduced-fat and reduced-protein dairy product

### Background

Three versions of the dairy product (reduced protein and reduced-fat milk) were prepared for descriptive analysis by a focus group of untrained panellists (n=10). These products included:
o A fresh pasteurised sample
o A UHT treated sample
o A reconstituted spray dried sample

All dairy products had a 1.5% protein and 1.5% fat content and were taste-tested versus a control with 3.1% protein. Both the UHT and reconstituted spray dried samples were also taste-tested versus commercially available toddler milk (1.5% protein and 1.9% fat). Each of the panellists was invited to blindly taste all samples and to guess which ones were the reduced protein and reduced-fat dairy products.

### Taste Session Outcome

Of the 10 panellists, 5 believed the reduced-protein and reduced-fat dairy products to have a superior taste, whereas the other 5 panellists believed the 3.1% protein controls to be of superior taste. There was a general consensus that a consumer would not be able to tell the difference if their regular reduced-fat milk was replaced with the reduced-protein and reduced-fat dairy product. Also, it was obvious to all panellists which sample was the commercially available toddler milk due to its brownish colour and characteristically sweet taste.

### Results

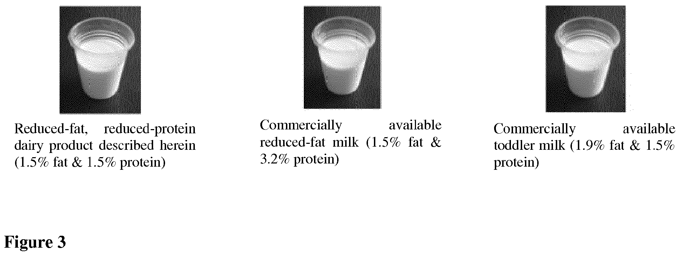

- No taste difference vs. regular reduced-fat milk
- No apparent loss of whiteness due to reduced protein (see Figure 3)
- Noticeably different to commercially available toddler milks, which were very sweet, slightly burnt tasting and browner in comparison.

### Preliminary Sensory Assessment of Protein-reduced, Full-fat dairy product

The panellists found that there was no apparent loss of whiteness due to reduced protein and that there was a very satisfactory taste from the dairy product, with only a slight loss in mouthfeel.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A dairy product having a nutritional profile as follows:
| **Nutrient** | **Range (w/v)** |
|---|---|
| Energy | 33-55 kCals |
| Protein | 0.9 to 2.5 g/100ml |
| Lipids | 1.5 to 2.5g/100ml |
| Carbohydrate (CHO) | 4 to 6 g/100ml |
| Vitamin B2 | 180µg/100ml |
| Vitamin A | 31 to 100 µg/100ml |
| Vitamin D | 0.17 µg/100ml |
| Iodine | 80-90 µg/100ml |
| Calcium | 70 to 120mg/100ml |

2. A dairy product having a nutritional profile as follows:
| **Nutrient** | **Range (w/v)** |
|---|---|
| Energy | 45-80 kcal/100ml |
| Protein | 0.9 to 2.5 g/100ml |
| Lipids | 3.0 to 4.5 g/100ml |
| Carbohydrate (CHO) | 4 to 6 g/100ml |
| Vitamin B2 | 180µg/100ml |
| Vitamin A | 31 to 100 µg/100ml |
| Vitamin D | 0.17 - 0.9 µg/100ml |
| Iodine | 80-90 µg/100ml |
| Calcium | 70 to 120mg/100ml |

3. A dairy product according to Claim 1 or Claim 2, wherein the product comes in the form of a liquid, a powder or UHT-treated.

4. A dairy product according to any one of Claims 1 to 3, wherein the product is nutritionally tailored for a toddler.

5. A dairy product according to any one of Claims 1 to 4, wherein the product originates from the milk of mammal such as a cow, a water buffalo, a goat, a sheep, a yak, a horse, a camel, a domestic buffalo, and a donkey.

6. A dairy product according to any one of the preceding claims, wherein the dairy product is milk, yoghurt, a yoghurt drink, a probiotic, chocolate milk, shake or mousse.

7. A method for manufacturing a reduced-fat, reduced-protein dairy product, the method comprising steps of:
a) passing skim milk through an ultrafiltration membrane to produce an ultrafiltration permeate; and
b) combining one part of the ultrafiltration permeate with whole milk;
wherein the dairy product is low in fat, low in protein and retains a taste profile similar to a reduced-fat milk.

8. A method according to Claim 7, further comprising the steps of:
(c) passing a second part of the ultrafiltration permeate through a nanofiltration membrane or a 1 kDa ultrafiltration membrane to produce a permeate; and
(d) combining the permeate with the combination of one part of the ultrafiltration permeate and whole milk in (b) to produce the dairy product which is low in fat, low in protein and retains a taste profile similar to a reduced-fat milk.

9. A method for producing a full-fat dairy, reduced-protein product, the method comprising the step of:
(a) passing skim milk through an ultrafiltration membrane to produce an ultrafiltration permeate;
(b) combining one part of the ultrafiltration permeate with whole milk; and
(c) blending cream with the combination of the one part of the ultrafiltration permeate combined with whole milk in (b) to produce the dairy product which is low in protein, has normal levels of fat when compared to whole milk and retains a taste profile similar to whole milk.

10. A method according to Claim 9, further comprising the steps of:
(d) passing a second part of the ultrafiltration permeate through a nanofiltration membrane or a 1 kDa ultrafiltration membrane to produce a permeate; and
(e) combining the permeate with the combination of the first part of the ultrafiltration permeate and whole milk produced in (b) prior to or following the step (c) of blending the cream.

11. A method according to any one of Claims 7 to 10, further comprising the step of adding one or more supplements to the product; wherein the supplements are optionally selected from vitamin B1, vitamin B2, vitamin B3, vitamin A, vitamin D, Iodine, calcium, docosahexaenoic acid (DHA) and iron.

12. A method according to any one of Claims 7 to 11, wherein the ultrafiltration step utilises membranes having a molecular weight cut off of between 5 kDa and 50 kDa.

13. A method according to any one of Claims 7 to 12, wherein the nanofiltration step utilises membranes having a molecular weight cut-off of between 100 and 1000 Da.

14. A method according to any one of Claims 7 to 13, wherein the milk originates from a mammal such as a cow, a water buffalo, a goat, a sheep, a yak, a horse, a camel, a domestic buffalo and a donkey.

15. A dairy product produced by the method of any one of Claims 7 to 14.
